# EUROPEAN PATENT APPLICATION

(11) **EP 1 981 005 A2**
(43) Date of publication of application: **15.10.2008**
(21) Application number: 08251171.8
(22) Date of filing: 28.03.2008
(51) Int. Cl.: G07F 7/10

(54) **Information processing method, electronic money terminal device, and electronic money reporting device**

(30) Priority: 11.04.2007 JP 2007103569
(71) Applicant: Sony Corporation, Tokyo (JP)
(72) Inventor: Sako, Yoichiro, Minato-ku Tokyo (JP); Fukushima, Takashi, Minato-ku Tokyo (JP); Matsumoto, Jun, Minato-ku Tokyo (JP); Abe, Miki, Minato-ku Tokyo (JP); Akagi, Tadao, Minato-ku Tokyo (JP); Asukai, Masamichi, Minato-ku Tokyo (JP); Ito, Taiji, Minato-ku Tokyo (JP); Sano, Akane, Minato-ku Tokyo (JP); Takehara, Mitsuru, Minato-ku Tokyo (JP); Yoshii, Shoji, Minato-ku Tokyo (JP)
(74) Representative: Horner, David Richard

(57) **Abstract**

An information processing method includes the steps of acquiring owner information of an owner of an electronic money medium, in which electronic money represented using electronic data is stored, and acquiring, with an information acquisition unit, verification information of a presenter who presents the electronic money medium when the electronic money medium is presented to an electronic money terminal; comparing the verification information with the owner information, and determining whether the verification information matches the owner information; and performing processing for permitting use of the electronic money medium in the case that the verification information matches the owner information, and performing processing for inhibiting use of the electronic money medium in the case that the verification information does not match the owner information.

## Description

### BACKGROUND OF THE INVENTION

The present invention relates to an information processing method for electronic money, an electronic money terminal device, and an electronic money reporting device.

### 2. Description of the Related Art

Electronic money (also referred to as digital cash or digital money) represents money or points by using electronic data.

In electronic money systems utilizing recording media such as integrated circuit cards (IC cards), electronic money data is recorded in a recording medium such as an IC card, so that electronic money is stored in the recording medium. In order to buy a commodity or receive service, the owner of an electronic money medium presents his or her electronic money medium. Subtraction of a certain amount of electronic money stored in the electronic money medium is performed by data transaction, and the amount of electronic money corresponding to the subtraction is transferred as payment to a seller of the commodity or a provider of the service.

In an electronic money system utilizing a network such as the Internet, electronic payment can be achieved by transferring electronic money data via the network.

As a technology of the related art relating to such electronic money, electronic money provided with a validity period is described in Japanese Unexamined Patent Application Publication No. 2001-175748.

In addition, a method and apparatus for allowing a user to easily control a plurality of cards is described in Japanese Unexamined Patent Application Publication No. 2004-192476.

In addition, generation of different types of sound effect according to electronic money cards using which payment transactions are executed is described in Japanese Unexamined Patent Application Publication No. 2006-31182.

In addition, use of an IC card to receive service on a network using a cellular phone terminal is described in Japanese Unexamined Patent Application Publication No. 2006-318453.

In general, electronic money such as Edy (registered trademark) has the property of anonymity. Thus, when an electronic money medium such as an IC card is presented, transaction is performed without identifying the person who presents the electronic money medium.

Thus, in a case where the owner of an electronic money medium loses his or her electronic money medium, electronic money stored in the electronic money medium may be used by a person who found the electronic money medium.

A card number of an IC card is written on a surface of the IC card. Thus, in a case where the card owner keeps the card number and a person who found the IC card reports the found IC card to a card issuer or an administrator who takes administrative control of an electronic money system, the IC card can be returned to the card owner. However, even in this case, it is not necessarily easy to prove the validity of the ownership of the IC card.

Use of named electronic money has been considered. However, in a case where the name of an IC card owner is recorded in the IC card, it is necessary for a person who presents the IC card to announce or enter his or her name. In addition, a terminal to which the IC card is presented determines whether the name of the person who presents the IC card matches the name of the owner that is recorded in the IC card. These operations are complicated and hinder the circulation of electronic money.

In addition, even in a case where a lost IC card is found by someone, the person who found the IC card may find it bothersome to report the found IC card or may wonder where to report the found IC card. Thus, the found IC card may be left unreported.

Thus, it is desirable to prevent, without hindering the circulation of electronic money, unauthorized use of electronic money and to' achieve security at a level equivalent to that in the case of using named electronic money.

It is also desirable to increase the probability that a person who finds a lost electronic money medium reports the found electronic money medium, to reduce unauthorized use of electronic money, and to protect the interests of the owner of such an electronic money medium.

### SUMMARY OF THE INVENTION

An information processing method according to an embodiment of the present invention includes the steps of acquiring owner information of an owner of an electronic money medium, in which electronic money represented using electronic data is stored, and acquiring, with an information acquisition unit, verification information of a presenter who presents the electronic money medium when the electronic money medium is presented to an electronic money terminal; comparing the verification information with the owner information, and determining whether the verification information matches the owner information; and performing processing for permitting use of the electronic money medium in the case that the verification information matches the owner information, and performing processing for inhibiting use of the electronic money medium in the case that the verification information does not match the owner information.

In the information processing method, the owner information may include biometric information of the owner, and the verification information may include biometric information of the presenter.

In addition, in the information processing method, the owner information may include use status information indicating a status when the owner uses the electronic money medium, and the verification information may include presentation status information indicating a status when the electronic money medium is presented.

An electronic money reporting device according another embodiment of the present invention includes a medium insertion slot into which an electronic money medium, in which electronic money represented using electronic data is stored, is to be inserted; and information processing means for detecting the electronic money medium, which has been inserted into the medium insertion slot, and performing processing for returning at least some amount of electronic money stored in the electronic money medium to an owner of the electronic money medium.

In the information processing method according to one embodiment of the present invention, in the case that biometric information of a person who presents an electronic money medium or a status when the electronic money medium is presented does not match biometric information of the owner of the electronic money medium or the use status when the owner of the electronic money medium uses the electronic money medium, use of the electronic money medium is not permitted. Thus, unauthorized use of electronic money is prevented, and security at a level equivalent to that in the case of using named electronic money can be achieved. Furthermore, since a person who presents the electronic money medium does not have to announce or enter his or her name, the circulation of electronic money is not hindered.

In the electronic money reporting device according to one embodiment of the present invention, in a case where a person who found a lost electronic money medium inserts the found electronic money medium into the medium insertion slot of the electronic money reporting device, at least some amount of electronic money stored in the electronic money medium is returned to the owner of the electronic money medium. Thus, there is an increased probability that a person who finds a lost electronic money medium reports the found electronic money medium. As a result, unauthorized use of electronic money is reduced, and the interests of the owner of the electronic money medium is protected.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 illustrates an example of an electronic money system according to an embodiment of the present invention;
Fig. 2 illustrates an example of an electronic money terminal device;
Figs. 3A and 3B illustrate an example of an electronic money reporting device;
Fig. 4 illustrates an example of an information processing terminal of the electronic money reporting device;
Fig. 5 is a flowchart showing an example of a use restriction process to be performed by the electronic money terminal device;
Fig. 6 is a flowchart showing a part of an example of a use restriction process to be performed by the electronic money terminal device and the management server;
Fig. 7 is a flowchart showing a part of the example of the use restriction process to be performed by the electronic money terminal device and the management server;
Fig. 8 is a flowchart showing an example of a series of processing operations to be performed by the electronic money terminal device in a case where a locking and unlocking function is provided; and
Fig. 9 is a flowchart showing an example of a series of processing operations relating to payment of a reward and return of electronic money.

### DESCRIPTION OF THE PREFERRED EMBODIMENTS

In this specification, the term "electronic money" refers to money or points represented using electronically encrypted data. The amount of electronic money may be represented by any currency, such as yen or dollars. Points are exchangeable for commodities or services in accordance with the number of points.

An electronic money medium is a so-called electronic wallet. Electronic money data is recorded in the electronic money medium so that electronic money is stored in the electronic money medium.

The electronic money medium may have any shape. For example, the electronic money medium may have the shape of an IC card.

Electronic money media are categorized into various types according to their communication methods. In the case of a contact-type electronic money medium having a terminal, the terminal is inserted into a reader/writer so that electronic power can be supplied to the electronic money medium through the terminal and data transfer can be achieved. In the case of a contactless-type electronic money medium, the electronic money medium is brought in close proximity to a reader/writer so that electronic power can be supplied to the electronic money medium and data transfer can be achieved. In addition, electronic money media of a type having both the functions of such contact-type electronic money media and the functions of such contactless-type electronic money media are available. An electronic money medium to be used in an embodiment of the present invention may be of any type.

In addition, electronic money media are categorized into various types according to the configurations of their IC chips. For example, electronic money media in which a memory and a central processing unit (CPU) are installed, electronic money media in which a memory and a logic circuit implementing simple control are incorporated, and electronic money media including a memory but not including a CPU are available. An electronic money medium to be used in an embodiment of the present invention may be of any type.

Electronic money systems are categorized into prepaid-type electronic money systems for which charging to an electronic money medium is necessary and electronic money systems having the features of such prepaid-type electronic money systems and the features of post-payment-type systems in which credit granting is provided. An electronic money system to be used in an embodiment of the present invention may be of any type.

Portable terminals, such as cellular phone terminals containing an electronic money medium such as an IC card, also serve as electronic money media.

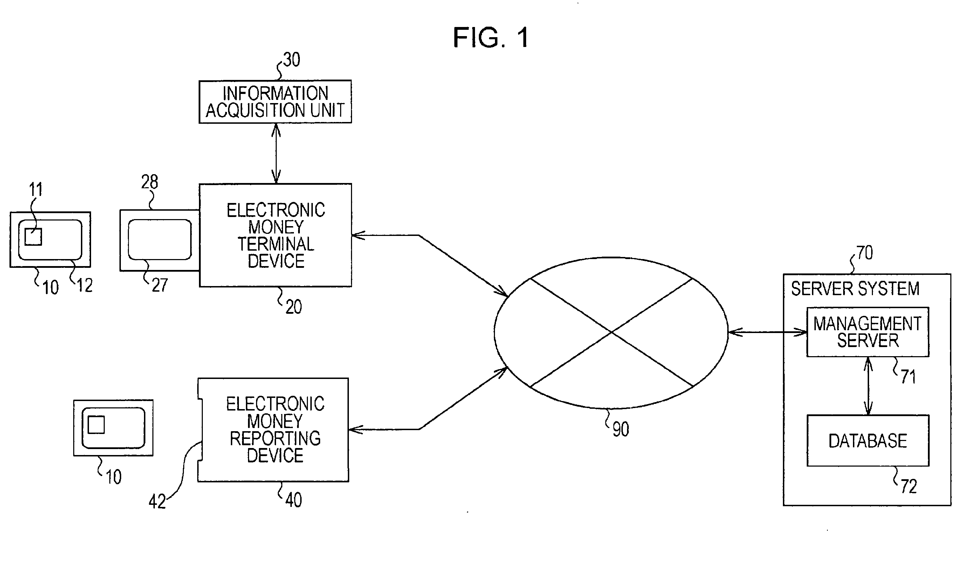

Fig. 1 shows an example of an electronic money system according to an embodiment of the present invention.

An electronic money card 10 is a contactless IC card, such as a FeliCa (registered trademark) card. The electronic money card 10 includes an IC chip 11 and an antenna 12.

In the electronic money system shown in Fig. 1, an electronic money terminal device 20, an electronic money reporting device 40, and a server system 70 are connected each other via a network 90.

The electronic money terminal device 20 performs processing, such as payment transaction, and is installed, for example, in a store selling commodities or a facility providing services. The electronic money terminal device 20 has a function of a reader/writer to which the electronic money card 10 is presented so that payment for a commodity or service can be made. An information acquisition unit 30 that acquires verification information, which will be described below, is connected to the electronic money terminal device 20.

The electronic money reporting device 40 performs processing for paying a reward to a finder (reporter) who finds the electronic money card 10, which has been lost by the card owner of the electronic money card 10, and reports the found electronic money card 10 and for returning the electronic money to the card owner. The electronic money reporting device 40 is also installed, for example, in a store selling commodities or a facility providing services.

The server system 70 includes a management server 71 and a database 72. The server system 70 is installed by an administrator who takes administrative control of the electronic money system.

The network 90 is a general-purpose network, such as the Internet, or a network dedicated to the electronic money system.

In the electronic money system shown in Fig. 1, data to be transferred from the electronic money terminal device 20 or the electronic money reporting device 40 to the management server 71 and data to be transferred from the management server 71 to the electronic money terminal device 20 or the electronic money reporting device 40 are encrypted, so that security in the system can be ensured.

The electronic money system also includes a server of an issuer who is provided with a license to issue a card by the administrator who takes administrative control of the system, a server of a credit granter who grants credit to a card owner, and the like, which are omitted in Fig. 1.

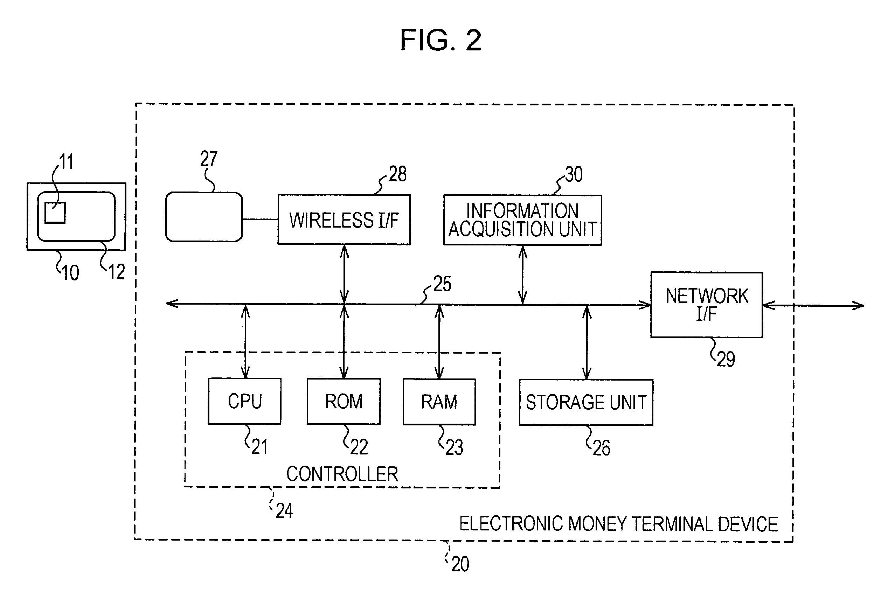

Referring to Fig. 2, the electronic money terminal device 20 includes a controller 24. The controller 24 includes a CPU 21, a read-only memory (ROM) 22, and a random-access memory (RAM) 23. A storage unit 26, a wireless interface 28 including an antenna 27, a network interface 29, and the information acquisition unit 30 are connected to a bus 25 of the controller 24.

For example, a Felica interface may be used as the wireless interface 28, which serves as an electronic money interface.

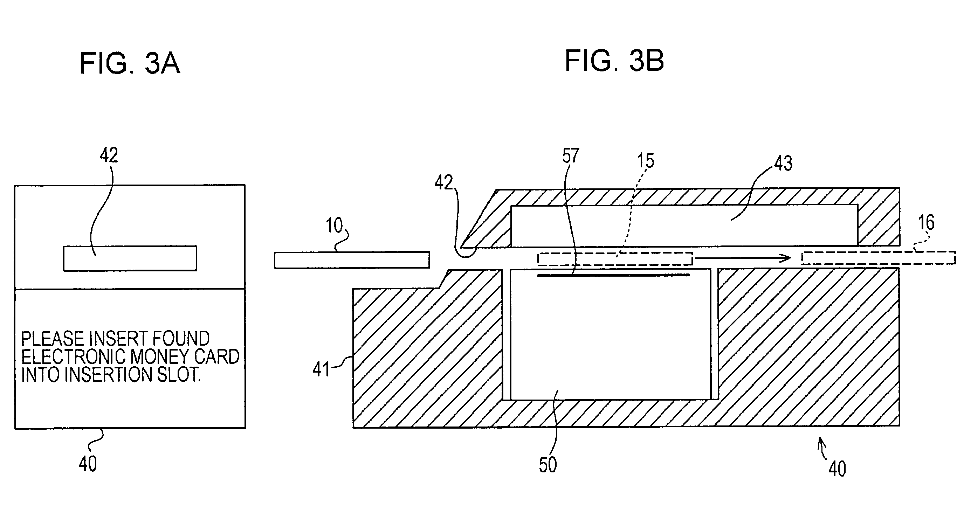

Fig. 3A is a front view showing the configuration of the electronic money reporting device 40, and Fig. 3B is a side view showing the configuration of the cross section of a part of the electronic money reporting device 40. Referring to Figs. 3A and 3B, the electronic money reporting device 40 has a card insertion slot 42, into which the electronic money card 10 is to be inserted, on the front side of a casing 41. The casing 41 includes a sliding mechanism 43 for leading the electronic money card 10, which has been inserted into the card insertion slot 42, to a predetermined position, as represented by a broken line 15, and then pushing the electronic money card 10 to the rear of and outside the casing 41, as represented by a broken line 16. The casing 41 also includes an information processing terminal 50 for detecting the electronic money card 10, which has been led to the predetermined position as represented by the broken line 15, and performing the above-mentioned processing.

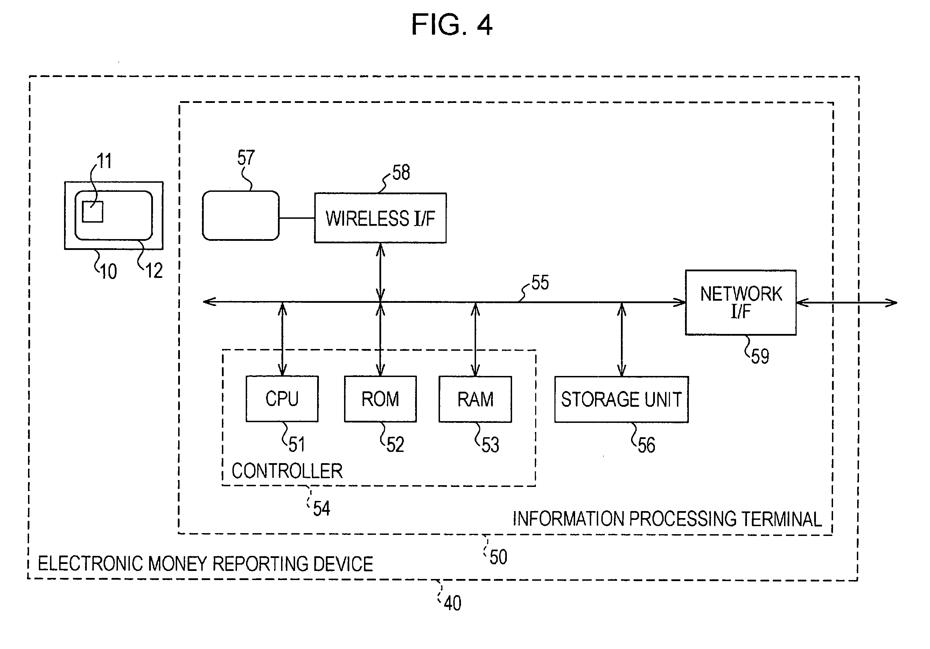

Referring to Fig. 4, similarly to the electronic money terminal device 20, the information processing terminal 50 includes a controller 54. The controller 54 includes a CPU 51, a ROM 52, and a RAM 53. A storage unit 56, a wireless interface 58 including an antenna 57, and a network interface 59 are connected to a bus 55 of the controller 54.

In the electronic money system shown in Fig. 1, unauthorized use of the electronic money card 10 by a person who found the electronic money card 10, which has been lost by the card owner of the electronic money card 10, is prevented in accordance with any one of the methods described below.

In order to prevent unauthorized use, owner information and verification information, which is to be compared with the owner information, are used.

In a first method, biometric information of a card owner is used as owner information, and biometric information of a card presenter (that is, a person who presents the electronic money card 10) is used as verification information.

Here, it is necessary to prepare biometric information of a card owner and biometric information of a card presenter that are of the same type. For example, in a case where a finger vein pattern of a card owner is used as biometric information of the card owner, it is necessary to use a finger vein pattern of a card presenter as biometric information of the card presenter. Alternatively, for example, in a case where a fingerprint of a card owner is used as biometric information of the card owner, it is necessary to use a fingerprint of a card presenter as biometric information of the card presenter. Alternatively, in a case where an iris pattern of a card owner is used as biometric information of the card owner, it is necessary to use an iris pattern of a card presenter as biometric information of the card presenter.

At the time of or after the issuance of the electronic money card 10, biometric information of the card owner is recorded in the electronic money card 10. Alternatively, the biometric information may be registered in the database 72 of the server system 70 in association with card identification information, such as a number and a name recorded in the electronic money card 10.

Biometric information of a card presenter is detected and acquired by the information acquisition unit 30 of the electronic money terminal device 20 shown in Figs. 1 and 2 when the card presenter presents the electronic money card 10.

That is, the information acquisition unit 30 includes a detector, such as a sensor or a camera, for detecting a vein pattern, a fingerprint, or an iris pattern of a card presenter, and a signal processor for processing a detection signal acquired from the detector.

In a second method, use status information of a card owner is used as owner information, and presentation status information, which indicates a status when the electronic money card 10 is presented, is used as verification information.

Use status information of a card owner indicates at least one of a place (area, store, or facility) where the card owner used the electronic money card 10, a date and time when the card owner used the electronic money card 10, and a purpose (objective) for which the card owner used the electronic money card 10. For example, "Minato-ku" and "Sinagawa-ku" are used as use status information indicating places. For example, "from 8.00 a.m. to 9.00 p.m. on any day" is used as use status information indicating a date and time. For example, "purchase price or transportation less than or equal to 3,000 yen for a single transaction" is used as use status information indicating a purpose.

Every time the card owner uses the electronic money card 10, the electronic money terminal device 20, which includes the information acquisition unit 30, detects the place where the electronic money card 10 is used, the date and time when the electronic money card 10 is used, or the purpose for which the electronic money card 10 is used, and rewrites and records such use status information in the electronic money card 10. Alternatively, the use status information may be registered in the database 72 of the server system 70 in association with card identification information, such as a number and a name recorded in the electronic money card 10.

Use status information is not necessarily a record. A card owner may set in advance the use status of the electronic money card 10.

Presentation status information also indicates at least one of a place where the electronic money card 10 is presented, a date and time when the electronic money card 10 is presented, and a purpose for which the electronic money card 10 is presented. When the electronic money card 10 is presented, the electronic money terminal device 20, which includes the information acquisition unit 30, detects the place where the electronic money card 10 is presented, the date and time when the electronic money card 10 is presented, or the purpose for which the electronic money card 10 is presented. Accordingly, such presentation status information is acquired.

Thus, in this case, the information acquisition unit 30 detects, for example, the place where the electronic money terminal device 20 is located using a global positioning system (GPS) or the like or detects the date and time when the electronic money card 10 is presented using a calendar or a clock.

In the electronic money system shown in Fig. 1, when the electronic money card 10 is presented to the electronic money terminal device 20, that is, when a person who carries the electronic money card 10 brings the electronic money card 10 in close proximity to the wireless interface 28, which includes the antenna 27, of the electronic money terminal device 20 in order to buy a commodity or the like, the above-described verification information is compared with owner information. If it is determined that the verification information matches the owner information, use of the electronic money card 10 is permitted. However, if it is determined that the verification information does not match the owner information, use of the electronic money card 10 is not permitted.

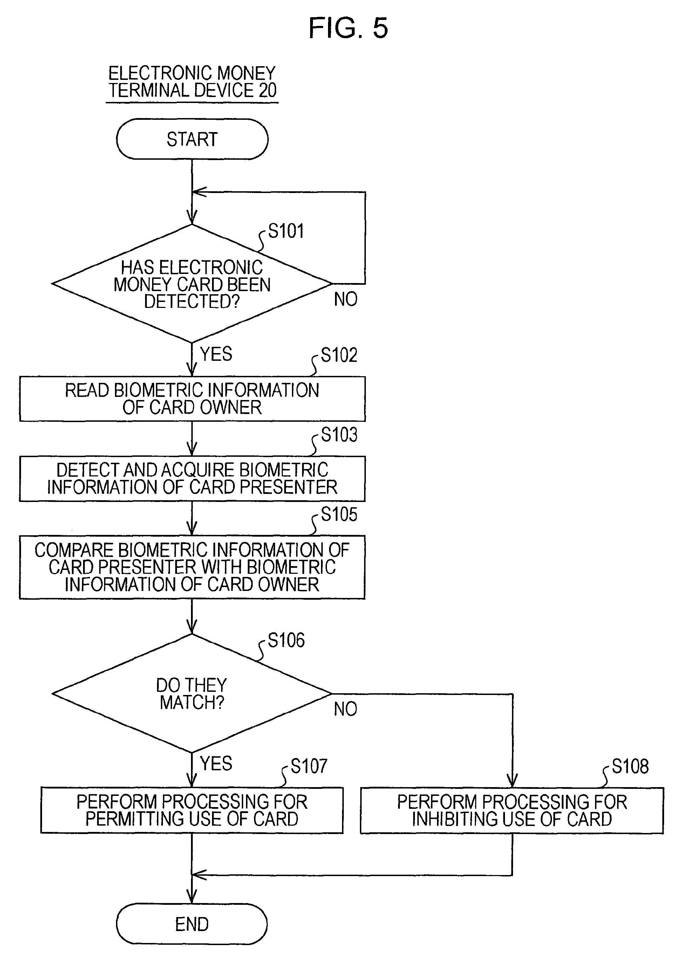

Fig. 5 is a flowchart showing an example of a use restriction process to be performed in a case where biometric information of a card owner is used as owner information and biometric information of a card presenter is used as verification information, as in the first method, and where the biometric information of the card owner is recorded in advance in the electronic money card 10 and the electronic money terminal device 20 performs all the series of processing operations.

In this example, in step S101, the electronic money terminal device 20 determines whether the presence of the electronic money card 10 has been detected. If it is determined in step S101 that the presence of the electronic money card 10 has been detected due to the electronic money card 10 brought in close proximity to the wireless interface 28 of the electronic money terminal device 20, the process proceeds to step S102 to read the biometric information of the card owner, which has been recorded in the electronic money card 10. Then, in step S103, the information acquisition unit 30 detects and acquires the biometric information of the card presenter.

However, after the biometric information of the card presenter is detected and acquired, the biometric information of the card owner may be read.

In step S105, the biometric information of the card presenter is compared with the biometric information of the card owner. In step S106, it is determined, in accordance with the comparison result, whether the biometric information of the card presenter matches the biometric information of the card owner.

If it is determined in step S106 that the biometric information of the card presenter matches the biometric information of the card owner, that is, the electronic money card 10 is presented by the card owner, the process proceeds to step S107 to perform processing for permitting use of the electronic money card 10, that is, processing for permitting purchase of a commodity or reception of service using electronic money stored in the electronic money card 10.

If it is determined in step S106 that the biometric information of the card presenter does not match the biometric information of the card owner, that is, a card finder, who is different from the card owner, presents the electronic money card 10, the process proceeds to step S108 to perform processing for inhibiting use of the electronic money card 10.

More specifically, a warning indicating that the card presenter is not permitted to use the electronic money card 10 is reported to the card presenter by using warning display or warning sound, and the electronic money card 10 enters a locked mode so that electronic money stored in the electronic money card 10 is not usable. In addition, a different routine that directly reports to the card owner that the electronic money card 10 has been found by someone or that reports to the management server 71 that the electronic money card 10 has been found by someone and causes the management server 71 to report to the card owner that the electronic money card 10 has been found by someone may be executed.

Accordingly, unauthorized use of the electronic money card 10 by a person who found the electronic money card 10 or the like can be prevented.

Although all the series of processing operations are performed by the electronic money terminal device 20 in the above-described example, part of the series of processing operations may be performed by the management server 71.

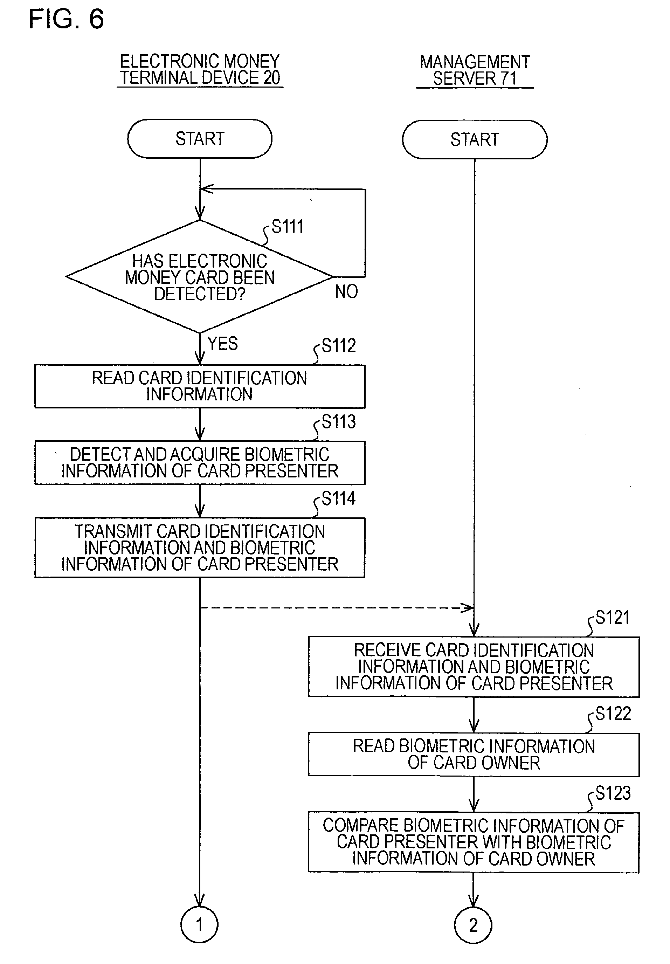

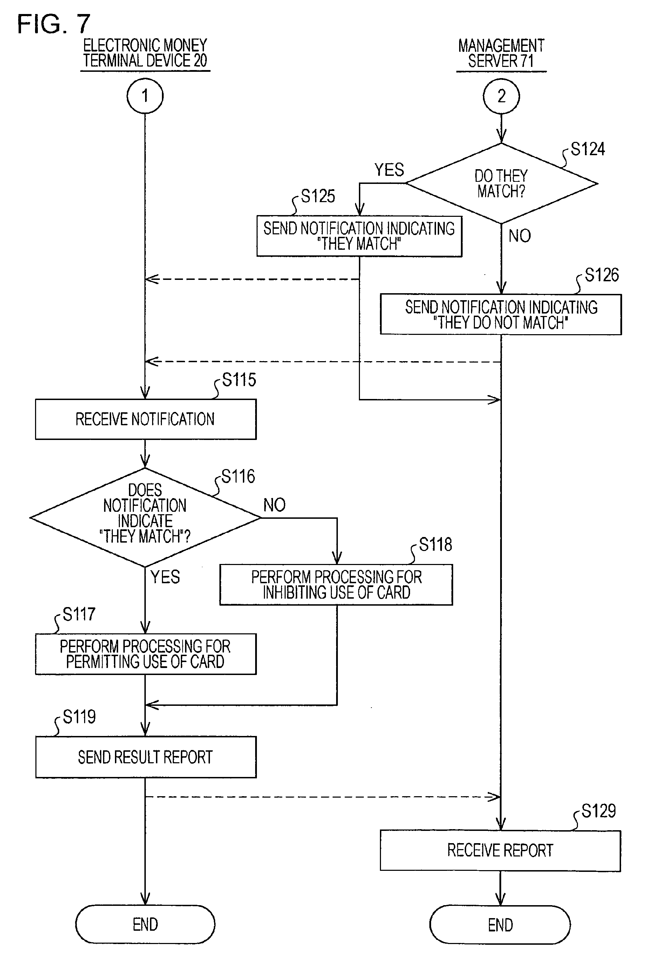

Figs. 6 and 7 are flowcharts showing an example of a use restriction process to be performed in a case where biometric information of a card owner is used as owner information and biometric information of a card presenter is used as verification information, as in the first method, and where the biometric information of the card owner is registered in advance in the management server 71 and the management server 71 performs part of the series of processing operations.

In this example, in step S111, the electronic money terminal device 20 determines whether the presence of the electronic money card 10 has been detected. If it is determined in step S111 that the presence of the electronic money card 10 has been detected, the process proceeds to step S112 to read card identification information, such as a number and a name recorded in the electronic money card 10. Then, in step S113, the information acquisition unit 30 detects and acquires the biometric information of the card presenter.

However, after the biometric information of the card presenter is detected and acquired, the card identification information may be read.

In step S114, the electronic money terminal device 20 transmits the card identification information and the biometric information of the card presenter to the management server 71.

In step S121, the management server 71 receives the card identification information and the biometric information of the card presenter. In step S122, in accordance with the card identification information, the management server 71 reads the biometric information of the card owner, which has been registered in advance in the database 72 in association with the card identification information.

In step S123, the management server 71 compares the biometric information of the card presenter with the biometric information of the card owner. In step S124, it is determined, in accordance with the comparison result, whether the biometric information of the card presenter matches the biometric information of the card owner.

If it is determined in step S124 that the biometric information of the card presenter matches the biometric information of the card owner, the management server 71 proceeds to step S125 to notify the electronic money terminal device 20 that the biometric information of the card presenter matches the biometric information of the card owner. If it is determined in step S124 that the biometric information of the card presenter does not match the biometric information of the card owner, the management server 71 proceeds to step S126 to notify the electronic money terminal device 20 that the biometric information of the card presenter does not match the biometric information of the card owner.

After the processing of step S114, the electronic money terminal device 20 proceeds to step S115 to receive a notification from the management server 71. In step S116, the electronic money terminal device 20 determines whether the notification indicates that "the biometric information of the card presenter matches the biometric information of the card owner" or that "the biometric information of the card presenter does not match the biometric information of the card owner".

If it is determined in step S116 that the notification indicates that "the biometric information of the card presenter matches the biometric information of the card owner", the electronic money terminal device 20 proceeds to step S117 to perform processing for permitting use of the electronic money card 10. If it is determined in step S116 that the notification indicates that "the biometric information of the card presenter does not match the biometric information of the card owner", the electronic money terminal device 20 proceeds to step S118 to perform processing for inhibiting use of the electronic money card 10.

In step S119, the electronic money terminal device 20 reports the result to the management server 71. In step S129, the management server 71 receives the report.

The examples of the use restriction process to be performed in accordance with the first method, that is, the use restriction process to be performed in a case where biometric information of a card owner is used as owner information and biometric information of a card presenter is used as verification information, have been described. A use restriction process to be performed in accordance with the second method, that is, a use restriction process to be performed in a case where use status information of a card owner is used as owner information and presentation status information is used as verification information, is performed in a similar manner.

More specifically, for example, in a case where information indicating places, "Minato-ku" and "Shinagawa-ku", information indicating a date and time, "from 8.00 a.m. to 9.00 p.m. at any day", and information indicating a purpose, "purchase price or transportation less than or equal to 3,000 yen for a single transaction", are used as use status information of a card owner, if information indicating a place, "Shinjuku-ku", information indicating a date and time "3.00 a.m.", and information indicating a purpose, "food and drink cost of 20,000 yen", are acquired as presentation status information, which indicates a status when the card presenter presents the electronic money card 10, the presentation status information does not match the use status information. Thus, use of the electronic money card 10 is not permitted.

Unauthorized use of the electronic money card 10 by a person who found the electronic money card 10 or the like can be prevented in accordance with any of the above-described processes. However, for example, in a case where the card owner of the electronic money card 10 hands the electronic money card 10 to someone and asks him or her to buy a commodity using the electronic money card 10, biometric information of the card presenter does not match biometric information of the card owner. Thus, use of the electronic money card 10 is not permitted.

In addition, in a case where the use restriction process is performed in accordance with the second method, for example, if the card owner wants to use the electronic money card 10 at a place that is different from the place where the card owner usually uses the electronic money card 10, for a purpose that is different from the purpose for which the card owner usually uses the electronic money card 10, or on a date and time that is different from the date and time when the card owner usually uses the electronic money card 10, such presentation status information does not match use status information. Thus, use of the electronic money card 10 is not permitted.

Under such circumstances, the card owner is able to cancel the above-described restricted mode (that is, locked mode) of the electronic money card 10 and then return the electronic money card 10 to the restricted mode.

Unlocking (cancelation of the restricted mode) and locking (setting of the restricted mode) can be performed using a personal computer, for example, by bringing the electronic money card 10 in close proximity to an electronic money interface, such as PaSoRi (registered trademark), which is an interface compatible with FeliCa, connected to the personal computer via a universal serial bus (USB) or the like. Alternatively, in a case where the electronic money card 10 is contained in a portable terminal, such as a cellular phone terminal, unlocking and locking can be performed using the portable terminal.

Alternatively, the electronic money terminal device 20 can be configured such that unlocking and locking can be performed when the owner of the electronic money card 10 brings the electronic money card 10 in close proximity to the wireless interface 28 of the electronic money terminal device 20.

However, in any case, concerning unlocking, the restricted mode can be canceled only when the card owner enters a password, a personal identification number, or the like, which has been set for the electronic money card 10.

In a case where a card owner wants someone to use his or her electronic money card 10, the card owner can cancel the locked mode (restricted mode), as described above. After the electronic money card 10 is used by the person who is asked to use the electronic money card 10, the card owner can return the electronic money card 10 to the locked mode if necessary. The same applies to a case where the second method is used.

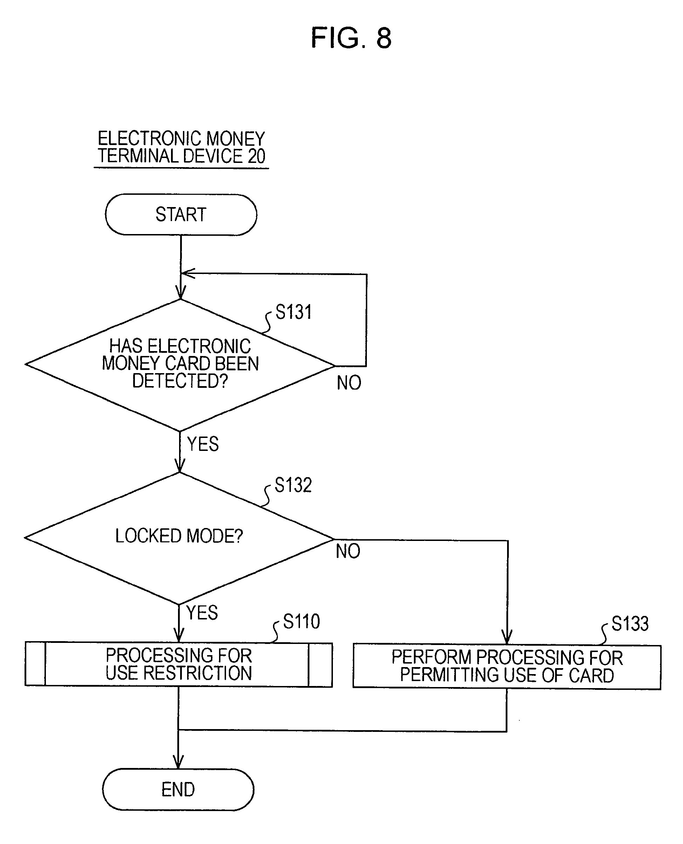

Fig. 8 is a flowchart showing an example of a series of processing operations to be performed in a case where the above-described locking and unlocking function is provided, where biometric information of a card owner is used as owner information and biometric information of a card presenter is used as verification information, and where the biometric information of the card owner is recorded in advance in the electronic money card 10 and the electronic money terminal device 20 performs all the series of processing operations, as in the example shown in Fig. 5.

Referring to Fig. 8, in step S131, the electronic money terminal device 20 determines whether the presence of the electronic money card 10 has been detected. If it is determined in step S131 that the presence of the electronic money card 10 has been detected, the electronic money terminal device 20 proceeds to step S132 to determine whether the electronic money card 10 is in the locked mode.

If it is determined in step S132 that the electronic money card 10 is in the locked mode, the electronic money terminal device 20 proceeds to step S110 to perform the processing for use restriction, which has been described as the processing of steps S102 to S108 in Fig. 5.

If it is determined in step S132 that the electronic money card 10 is not in the locked mode, that is, the electronic money card 10 is in the unlocked mode, the electronic money terminal device 20 proceeds to step S133 to perform processing for permitting use of the electronic money card 10 without acquiring the biometric information of the card owner and the biometric information of the card presenter and without comparing the biometric information of the card owner with the biometric information of the card presenter.

In a case where a person who found the electronic money card 10, which has been lost by the card owner, inserts the found electronic money card 10 into the card insertion slot 42 of the electronic money reporting device 40 shown in Figs. 3A and 3B and Fig. 4 in the electronic money system shown in Fig. 1, a reward is paid to the card finder and electronic money is returned to the card owner, as described below.

The reward corresponds to a predetermined proportion of the amount of electronic money stored in the electronic money card 10 or a predetermined amount of electronic money. In a case where the reward corresponds to a predetermined proportion of the amount of electronic money stored in the electronic money card 10, a fixed proportion, such as 10% of the amount of electronic money stored in the electronic money card 10, may be set, irrespective of the amount of money stored in the electronic money card 10. However, the proportion may be determined in a stepwise manner according to the amount of electronic money stored in the electronic money card 10. In a case where the reward corresponds to a predetermined amount of electronic money, if the amount of electronic money stored in the electronic money card 10 is less than the predetermined amount of electronic money, the reward corresponds to the entire amount of electronic money stored in the electronic money card 10.

It is desirable that the reward is charged (paid) as electronic money to an electronic money card owned by the card finder, the electronic money card being different from the lost and found electronic money card 10.

In the electronic money system shown in Fig. 1, the electronic money reporting device 40 is installed near the electronic money terminal device 20 and the electronic money terminal device 20 is connected to the electronic money reporting device 40. In a case where the electronic money terminal device 20 has a charging function, after inserting the found electronic money card 10 into the card insertion slot 42 of the electronic money reporting device 40, the card finder is able to immediately receive a reward by bringing an electronic money card owned by the card finder in close proximity to the wireless interface 28 of the electronic money terminal device 20.

Alternatively, after inserting the found electronic money card 10 into the card insertion slot 42 of the electronic money reporting device 40, the card finder may connect a personal computer or a portable terminal to the management server 71 so that the card finder can receive charging of electronic money as a reward.

Alternatively, a reward may be paid to a card finder as issuance of an electronic money card or a ticket that can be exchanged for electronic money.

Electronic money corresponding to the amount remaining after subtracting the reward from the electronic money that was stored in the electronic money card 10 or electronic money corresponding to the amount remaining after subtracting the reward and a predetermined commission from the electronic money that was stored in the electronic money card 10 is returned to the card owner.

The found electronic money card 10 in which electronic money corresponding to the amount remaining after subtraction of at least a reward is stored may be returned to the card owner of the electronic money card 10. Alternatively, the found electronic money card 10 may be disposed of and the card owner of the found electronic money card 10 may connect a personal computer or a portable terminal to the management server 71 so that electronic money corresponding to the amount remaining after subtraction of at least a reward can be returned to the card owner as charging to a different electronic money card owned by the card owner.

Consequently, a person who finds a lost electronic money card 10 is less likely to find it bothersome to report the electronic money card 10 or less likely to wonder where to report the electronic money card 10. Thus, there is an increased probability that the card finder reports the electronic money card 10. As a result, unauthorized use of electronic money is reduced, and the interests of the owner of such an electronic money medium is protected.

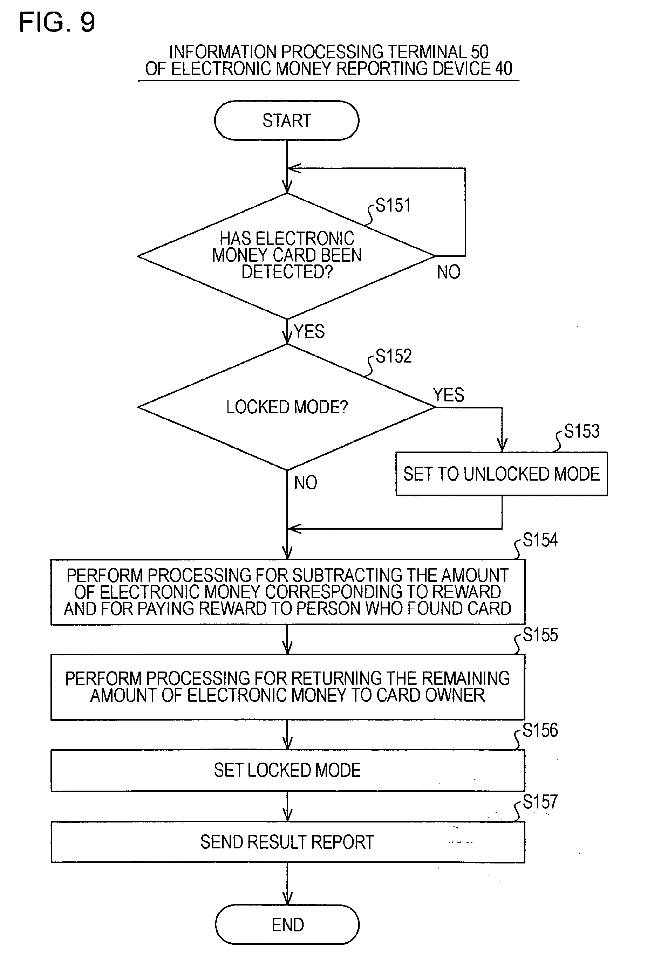

Fig. 9 is a flowchart showing an example of a series of processing operations relating to the payment of a reward and the return of electronic money to be performed by the information processing terminal 50 of the electronic money reporting device 40 in the electronic money system shown in Fig. 1.

Referring to Fig. 9, in step S151, the information processing terminal 50 of the electronic money reporting device 40 determines whether the presence of the electronic money card 10 has been detected. If it is determined in step S151 that the presence of the electronic money card 10 has been detected due to the electronic money card 10 inserted into the card insertion slot 42 and led to the predetermined position as represented by the broken line 15, as shown in Figs. 3A and 3B, the information processing terminal 50 proceeds to step S152 to determine whether the electronic money card 10 is in the locked mode.

If it is determined in step S152 that the electronic money card 10 is in the locked mode, the information processing terminal 50 proceeds to step S153 to cancel the locked mode of the electronic money card 10, that is, set the electronic money card 10 to the unlocked mode so that a certain amount of electronic money is subtracted by data transaction in order to pay a reward to a person who found the electronic money card 10. Then, the information processing terminal 50 proceeds to step S154.

If it is determined in step S152 that the electronic money card 10 is in the unlocked mode, the information processing terminal 50 proceeds to step S154.

In step S154, the information processing terminal 50 performs processing for subtracting the reward from the amount of electronic money stored in the electronic money card 10 and for paying the reward to the person who found the electronic money card 10.

In step S155, the information processing terminal 50 performs processing for returning electronic money corresponding to the amount remaining after the subtraction to the card owner.

In step S156, the information processing terminal 50 sets the electronic money card 10 to the locked mode. In step S157, the information processing terminal 50 reports the result to the management server 71.

In the electronic money reporting device 40, after the information processing terminal 50 completes the above-described processing operations, the electronic money card 10 in the locked mode is pushed to the rear of and outside the casing 41, as represented by the broken line 16 in Fig. 3.

In a case where loss of the electronic money card 10 is not reported by the card owner of the electronic money card 10 before report of the finding of the electronic money card 10 by a person who found the electronic money card 10, as well as a case where loss of the electronic money card 10 is reported by the card owner of the electronic money card 10 before report of the finding of the electronic money card 10 by a person who found the electronic money card 10, after the above-described series of processing operations, the card owner is notified that the electronic money card 10 has been found and reported, and the card owner is able to receive electronic money in accordance with the above-described processing operations.

The present invention contains subject matter related to Japanese Patent Application JP 2007-103569 filed in the Japanese Patent Office on April 11, 2007, the entire contents of which are incorporated herein by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information processing method comprising the steps of:
acquiring owner information of an owner of an electronic money medium, in which electronic money represented using electronic data is stored, and acquiring, with an information acquisition unit, verification information of a presenter who presents the electronic money medium when the electronic money medium is presented to an electronic money terminal;
comparing the verification information with the owner information, and determining whether the verification information matches the owner information; and
performing processing for permitting use of the electronic money medium in the case that the verification information matches the owner information, and performing processing for inhibiting use of the electronic money medium in the case that the verification information does not match the owner information.

2. The information processing method according to Claim 1,
wherein the owner information includes biometric information of the owner, and
wherein the verification information includes biometric information of the presenter.

3. The information processing method according to Claim 1,
wherein the owner information includes use status information indicating a status when the owner uses the electronic money medium, and
wherein the verification information includes presentation status information indicating a status when the electronic money medium is presented.

4. The information processing method according to Claim 1,
wherein the owner information is recorded in advance in the electronic money medium, and
wherein the electronic money terminal, to which the electronic money medium is presented, performs the comparison of the verification information with the owner information and the determination of whether the verification information matches the owner information.

5. The information processing method according to Claim 1,
wherein the owner information is registered in advance in a management server, which is connected through a network to the electronic money terminal to which the electronic money device is presented, and
wherein the management server performs the comparison of the verification information with the owner information and the determination of whether the verification information matches the owner information.

6. The information processing method according to Claim 1,
wherein the electronic money medium is capable of being selectively set to a locked mode where processing including the comparison of the verification information with the owner information and the determination of whether the verification information matches the owner information is performed and to an unlocked mode where processing for permitting use of the electronic money medium is performed without performing the comparison of the verification information with the owner information and the determination of whether the verification information matches the owner information.

7. An electronic money terminal device comprising:
interface means to which an electronic money medium, in which electronic money represented using electronic data is stored, is to be presented;
information acquisition means for acquiring owner information of an owner of the electronic money medium and acquiring, with an information acquisition unit, verification information of a presenter who presents the electronic money medium when the electronic money medium is presented to the interface means; and
information processing means for comparing the verification information with the owner information and determining whether the verification information matches the owner information, wherein the information processing means performs processing for permitting use of the electronic money medium in the case that the verification information matches the owner information, and wherein the information processing means performs processing for inhibiting use of the electronic money medium in the case that the verification information does not match the owner information.

8. The electronic money terminal device according to Claim 7,
wherein the owner information includes biometric information of the owner, and
wherein the verification information includes biometric information of the presenter.

9. The electronic money terminal device according to Claim 7,
wherein the owner information includes use status information indicating a status when the owner uses the electronic money medium, and
wherein the verification information includes presentation status information indicating a status when the electronic money medium is presented.

10. The electronic money terminal device according to Claim 7,
wherein the owner information is recorded in advance in the electronic money medium.

11. The electronic money terminal device according to Claim 7,
wherein the owner information is registered in advance in a management server, which is connected to the electronic money terminal device through a network, and
wherein the management server transmits the owner information to the electronic money terminal device.

12. The electronic money terminal device according to Claim 7,
wherein the electronic money medium is capable of being selectively set to a locked mode where the information processing means compares the verification information with the owner information and to an unlocked mode where the information processing means performs processing for permitting use of the electronic money medium without comparing the verification information with the owner information.

13. An electronic money reporting device comprising:
a medium insertion slot into which an electronic money medium, in which electronic money represented using electronic data is stored, is to be inserted; and
information processing means for detecting the electronic money medium, which has been inserted into the medium insertion slot, and performing processing for returning at least some amount of electronic money stored in the electronic money medium to an owner of the electronic money medium.

14. The electronic money reporting device according to Claim 13,
wherein the information processing means performs processing for paying the at least some amount of electronic money stored in the electronic money medium to a person who reports the electronic money medium.

15. An information processing method comprising the steps of:
detecting an electronic money medium, in which electronic money represented using electronic data is stored, the electronic money medium being inserted into a medium insertion slot provided in a device; and
performing processing for returning at least some amount of electronic money stored in the electronic money medium to an owner of the electronic money medium.

16. The information processing method according to Claim 15, further comprising the step of:
performing processing for paying the at least some amount of electronic money stored in the electronic money medium to a person who reports the electronic money medium.

17. An electronic money terminal device comprising:
an interface section to which an electronic money medium, in which electronic money represented using electronic data is stored, is to be presented;
an information acquisition section configured to acquire owner information of an owner of the electronic money medium and acquire, with an information acquisition unit, verification information of a presenter who presents the electronic money medium when the electronic money medium is presented to the interface section; and
an information processing section configured to compare the verification information with the owner information and determine whether the verification information matches the owner information, wherein the information processing section performs processing for permitting use of the electronic money medium in the case that the verification information matches the owner information, and wherein the information processing section performs processing for inhibiting use of the electronic money medium in the case that the verification information does not match the owner information.

18. An electronic money reporting device comprising:
a medium insertion slot into which an electronic money medium, in which electronic money represented using electronic data is stored, is to be inserted; and
an information processing section configured to detect the electronic money medium, which has been inserted into the medium insertion slot, and perform processing for returning at least some amount of electronic money stored in the electronic money medium to an owner of the electronic money medium.
